# NEUE EUROPÄISCHE PATENTSCHRIFT

(11) **EP 3 020 506 B2**
(45) Veröffentlichungstag und Bekanntmachung des Hinweises auf die Entscheidung über den Einspruch: **02.03.2022**
(45) Hinweis auf die Patenterteilung: 14.11.2018
(21) Anmeldenummer: 15186301.6
(22) Anmeldetag: 22.09.2015
(51) Int. Cl.: B23Q 1/54

(54) **WERKZEUGMASCHINENEINHEIT ZUR AUSRICHTUNG EINES WERKZEUGS ODER EINES WERKSTÜCKS**
MACHINE-TOOL UNIT FOR ALIGNING A TOOL OR A WORKPIECE
UNITÉ DE MACHINE-OUTIL DESTINÉE À L'ALIGNEMENT D'UN OUTIL OU D'UNE PIÈCE À USINER

(30) Priorität: 12.11.2014 DE 102014223101
(43) Veröffentlichungstag der Anmeldung: 18.05.2016
(73) Patentinhaber: Supfina Grieshaber GmbH & Co. KG, 77709 Wolfach (DE)
(72) Erfinder: Müller, Markus, 77709 Oberwolfach (DE); König, Raphael, 72250 Freudenstadt (DE); Sonntag, Daniel, 77756 Hausach (DE)
(74) Vertreter: DREISS Patentanwälte PartG mbB

(56) Entgegenhaltungen:
- EP-A2- 1 815 940
- EP-B1- 1 920 877
- DE-A1- 4 207 201
- GB-A- 872 847
- US-A- 2 774 642

## Beschreibung

Die Erfindung betrifft eine Werkzeugmaschineneinheit zur Ausrichtung eines Werkzeugs oder eines Werkstücks, mit einer Basis zur Verbindung mit einem Maschinengestell und mit einem relativ zu der Basis bewegbaren Träger zur Anordnung des Werkzeugs oder des Werkstücks.

Werkzeugmaschineneinheiten sind aus der DE 42 07 201 A1, der GB 872 847 A und der US 2 774 642 A vorbekannt, wobei die DE 42 07 201 A1 die Basis für den Oberbegriff des Anspruchs 1 darstellt.

Der vorliegenden Erfindung liegt die Aufgabe zugrunde, eine Werkzeugmaschineneinheit zu schaffen, welche kompakt ist und eine einfache Einstellung einer Raumlage eines an dem Träger angeordneten Werkzeugs oder Werkstücks ermöglicht.

Diese Aufgabe wird durch eine Werkzeugmaschineneinheit nach Anspruch 1 gelöst.

Die erfindungsgemäßen Werkzeugmaschineneinheit ermöglicht es, den Träger unmittelbar an der Basis zu lagern, wobei die Lagereinheit drei Rotationsfreiheitsgrade bereitstellt, sodass der Träger um drei zueinander senkrechte Achsen herum bewegbar ist. Auf diese Weise ist es nicht erforderlich, zwischen Basis und Träger ein Zwischenelement anzuordnen, welches mit einem Rotationsfreiheitsgrad beweglich an der Basis angeordnet ist und welches mit einem weiteren Rotationsfreiheitsgrad eine bewegliche Lagerung für den Träger schafft.

Die Lagereinheit ist in Form eines Pendel- oder Gelenklagers ausgebildet. Dieses Lager hat drei Rotationsfreiheitsgrade.

Das Pendel- oder Gelenklager ermöglicht eine Bewegung des Trägers um einen virtuellen Lagerpunkt herum um drei zueinander senkrechte Rotationsachsen. Die Rotationsfreiheitsgrade sind durch sphärische Gleitflächen realisiert.

Erfindungsgemäß ist zudem vorgesehen, dass eine Schwenklageneinstelleinrichtung zur Einstellung einer Schwenklage des Trägers um eine Schwenkachse vorgesehen ist. Dies ist insbesondere dann vorteilhaft, wenn der Träger zur Anordnung eines Finishwerkzeugs, insbesondere in Form einer Topfscheibe, dient. In diesem Fall kann durch Einstellung der Schwenklage des Trägers ein Krümmungsprofil einer zu bearbeiteten Werkstückoberfläche beeinflusst werden, sodass dieses wahlweise eben, konkav gekrümmt (hohl) oder konvex gekrümmt (ballig) ist.

Ein Verstellbereich der Schwenklageneinstelleinrichtung kann beispielsweise bezogen auf eine Mittellage +/- 5°, insbesondere +/- 2° betragen.

Die Schwenkachse erstreckt sich erfindungsgemäß senkrecht zu einer Erstreckungsebene des Trägers und senkrecht zu einer Neigungsachse.

Erfindungsgemäß ist der Träger um die Schwenkachse verschwenkbar und um die Neigungsachse neigungseinstellbar, wobei die Schwenkachse und die Neigungsachse zueinander senkrecht verlaufen und wobei der Träger um eine sowohl zu der Schwenkachse als auch zu der Neigungsachse senkrechte dritte Achse herum unbewegbar ist. Auf diese Weise kann mit wenigen Bauteilen eine besonders stabile Lagerung des Trägers an der Basis geschaffen werden.

Eine besonders vorteilhafte Ausführungsform der Erfindung sieht vor, dass zur Festlegung des Trägers an der Basis mindestens eine Druckeinrichtung vorgesehen ist, welche den Träger von der Basis wegdrückt, und/oder mindestens eine Zugeinrichtung, welche den Träger in Richtung auf die Basis zieht. Die Druckeinrichtung und die Zugeinrichtung ermöglichen es, den Träger relativ zu der Basis zu verspannen, sodass unabhängig von der Raumlage, die der Träger relativ zu der Basis einnimmt, der Träger spielfrei an der Basis gehalten ist. Insbesondere kann auch ein etwaig vorhandenes Spiel der Lagereinheit ausgeglichen werden.

Eine besonders stabile Lagerung des Trägers an der Basis ergibt sich, wenn die Druckeinrichtung die Zugeinrichtung räumlich voneinander versetzt angeordnet sind. Dies bedeutet, dass die Druckeinrichtung und die Zugeinrichtung nicht entlang zueinander koaxialer Achsen eine Druckkraft beziehungsweise Zugkraft auf den Träger ausüben, sondern entlang von zueinander versetzten, insbesondere zueinander parallelen Achsen.

Eine vereinfachte Ausrichtung des Trägers relativ zu der Basis ergibt sich, wenn eine Neigungseinstelleinrichtung zur Einstellung einer Neigung des Trägers um eine Neigungsachse vorgesehen ist.

Ein Verstellbereich der Neigungseinstelleinrichtung kann beispielsweise bezogen auf eine Mittellage +/- 2°, insbesondere +/- 0,5° betragen.

Vorzugsweise erstreckt sich die Neigungsachse parallel zu einer Erstreckungsebene des Trägers. Dies ist insbesondere dann bevorzugt, wenn es sich bei dem an dem Träger angeordneten Werkzeug um ein Finishwerkzeug, insbesondere in Form einer Topfscheibe, handelt, welche eine zu bearbeitende Oberfläche eines Werkstücks mit einer Kreuzschliffstruktur versieht. Der Winkel von einander kreuzenden Schleifspuren kann dann mittels der Neigungseinstelleinrichtung beeinflusst werden.

Besonders bevorzugt ist es, wenn die Neigungseinstelleinrichtung als Druckeinrichtung wirksam ist, welche den Träger von der Basis wegdrückt. Auf diese Weise kann auf zumindest eine der Druckeinrichtungen verzichtet werden.

Besonders bevorzugt ist es, wenn die Neigungseinstelleinrichtung einen prismenförmigen Andrückkörper umfasst, welcher mit einem Teilumfang seiner Mantelfläche an einer Kontaktfläche des Trägers oder der Basis anliegt. Bei einem solchen Andrückkörper kann es sich beispielsweise um einen zylindrischen Körper handeln, der mit einer Mantellinie mit einer Kontaktfläche des Trägers oder der Basis zusammenwirkt. Der im Vergleich zu einer Punktabstützung linienförmige Kontakt ermöglicht es, den Träger hinsichtlich eines Rotationsfreiheitsgrads relativ zu der Basis festzulegen. Es ist also möglich, dass die Lagereinheit selbst drei Rotationsfreiheitsgrade bereitstellt, von denen aber nur zwei Rotationsfreiheitsgrade genutzt werden, wobei ein dritter Rotationsfreiheitsgrad durch den linienförmigen Kontakt zwischen dem Andrückkörper und dem Träger oder der Basis gesperrt wird.

Es versteht sich, dass die Basis nicht unmittelbar mit einem ortsfesten Maschinenfundament des Maschinengestells verbunden sein muss, sondern auch an einem Teil des Maschinengestells gelagert sein kann, welcher seinerseits relativ zu einem Aufstellort bewegbar ist.

In entsprechender Weise ist es nicht erforderlich, ein Werkzeug oder ein Werkstück unmittelbar und unbewegbar mit dem Träger zu verbinden; der Träger kann vielmehr auch zur Anordnung weiterer Elemente (Schlitten- oder Kreuzschlittenanordnungen, Dreh- und/oder Linearantrieb für ein Werkzeug oder Werkstück) dienen.

Wie vorstehend beschrieben, ergeben sich besondere Vorteile bei der Verwendung der Werkzeugmaschineneinheit als Teil einer Finishvorrichtung, da die erfindungsgemäße Werkzeugmaschineneinheit eine besonders präzise und gleichzeitig stabile Lagerung eines Werkzeugs oder eines Werkstücks ermöglicht.

Weitere Merkmale und Vorteile der Erfindung sind Gegenstand der nachfolgenden Beschreibung und der zeichnerischen Darstellung eines bevorzugten Ausführungsbeispiels.

In der Zeichnung zeigen
- Fig. 1: eine perspektivische Darstellung einer Finishvorrichtung;
- Fig. 2: eine perspektivische Darstellung einer Werkzeugmaschineneinheit der Finishvorrichtung gemäß Fig. 1;
- Fig. 3: eine perspektivische Darstellung der Werkzeugmaschineneinheit gemäß Fig. 2 aus einer rückwärtigen Perspektive;
- Fig. 4: eine Seitenansicht der Werkzeugmaschineneinheit gemäß Fig. 2, wobei ein Träger der Werkzeugmaschineneinheit eine Neigungsgrundstellung einnimmt;
- Fig. 5: eine der Fig. 4 entsprechende Ansicht, mit einem ausgehend aus der Neigungsgrundstellung in einer ersten Richtung geneigten Träger;
- Fig. 6: eine der Fig. 4 entsprechende Ansicht, mit einem ausgehend aus der Neigungsgrundstellung in einer zweiten Richtung geneigten Träger;
- Fig. 7: eine Draufsicht der Werkzeugmaschineneinheit gemäß Fig. 2, wobei der Träger eine Schwenklagengrundstellung einnimmt;
- Fig. 8: eine der Fig. 7 entsprechende Ansicht, mit einem ausgehend aus der Schwenklagengrundstellung in einer ersten Richtung verschwenkten Träger; und
- Fig. 9: eine der Fig. 7 entsprechende Ansicht, mit einem ausgehend aus der Schwenklagengrundstellung in einer zweiten Richtung verschwenkten Träger.

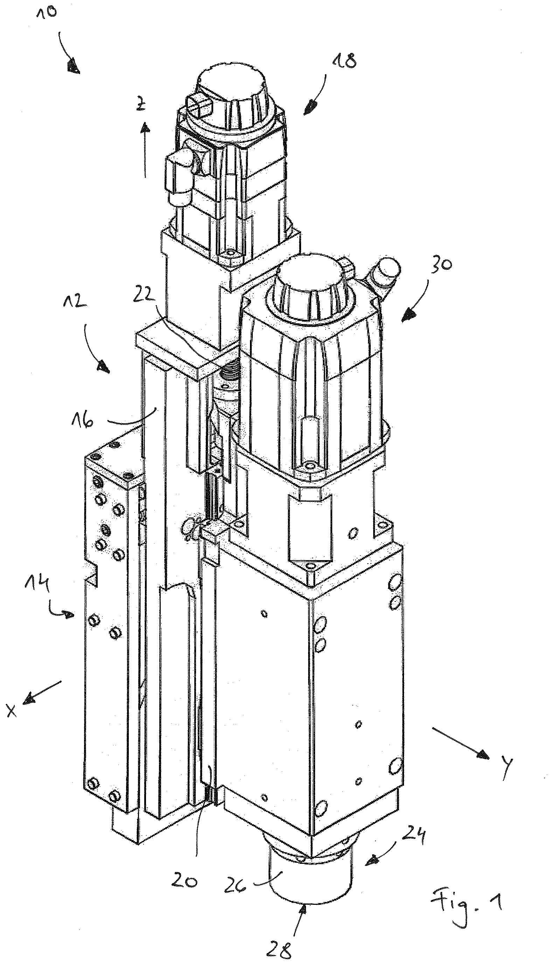

Eine Ausführungsform einer Finishvorrichtung ist in Figur 1 dargestellt und dort insgesamt mit dem Bezugszeichen 10 bezeichnet. Die Finishvorrichtung 10 umfasst eine Werkzeugmaschineneinheit 12 mit einer Basis 14 und einem an der Basis 14 bewegbar gelagerten Träger 16. Die Basis 14 ist an einem nicht dargestellten Geräteträger gehalten. Insbesondere ist die Basis 14 längs einer x-Achse verschiebbar an dem Geräteträger gehalten. Für den Fall, dass die in der Zeichnung dargestellte z-Achse einer vertikalen Richtung entspricht, bildet die Basis 14 einen Horizontalschlitten.

Der Träger 16 dient bei dem der in der Zeichnung dargestellten Ausführungsbeispiel als Halter für einen Antrieb 18 zum Linearantrieb eines Schlittens 20 in zu der z-Achse paralleler Richtung, beispielsweise mittels eines Spindeltriebs 22. Der Schlitten 20 kann auch als Vertikalschlitten bezeichnet werden.

Der Schlitten 20 dient zur Aufnahme eines Werkzeugs 24, welches insbesondere in Form einer Topfscheibe 26 ausgebildet ist und eine ringförmige Wirkfläche 28 zur finishenden Bearbeitung eines (nicht dargestellten) Werkstücks aufweist. Das Werkzeug 24 ist mittels eines Drehantriebs 30 in Drehrichtung antreibbar. Der Drehantrieb 30 ist ebenfalls mit dem Schlitten 20 verbunden.

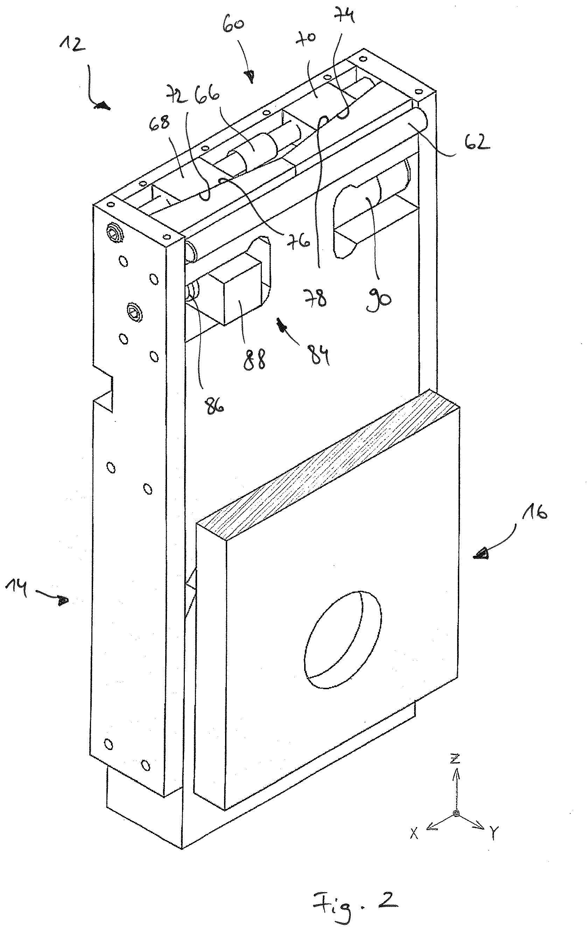

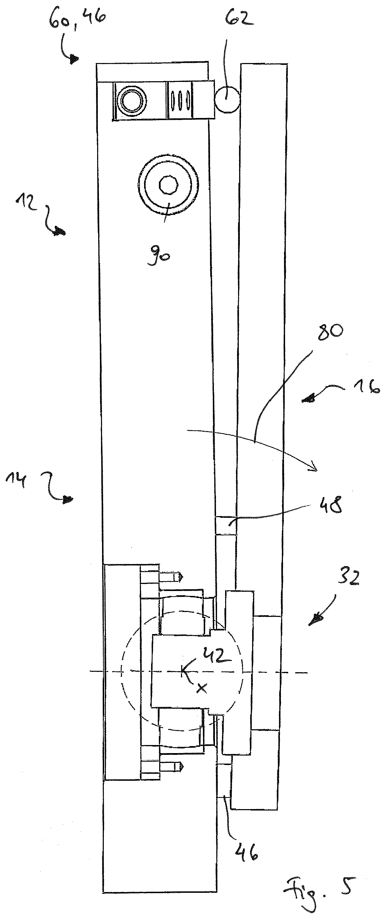

Nachfolgend werden der Aufbau und die Funktionsweise der Werkzeugmaschineneinheit 12 unter Bezugnahme auf die Figuren 2 bis 9 beschrieben.

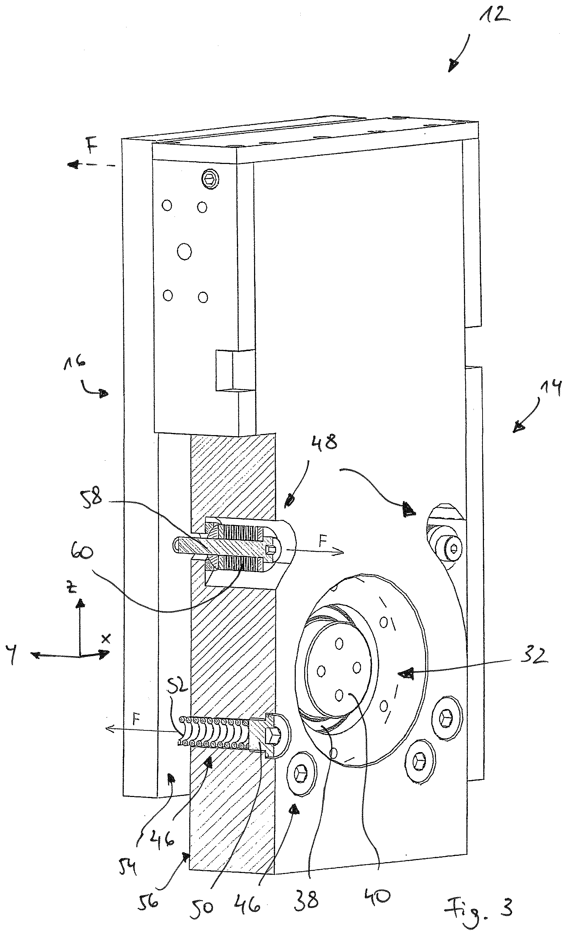

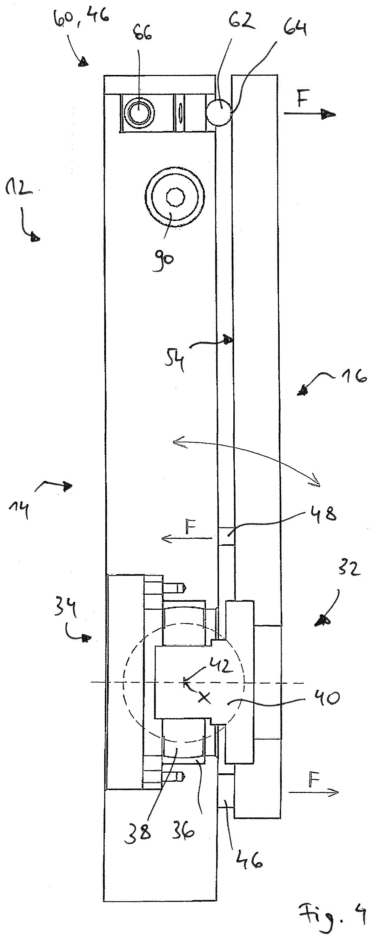

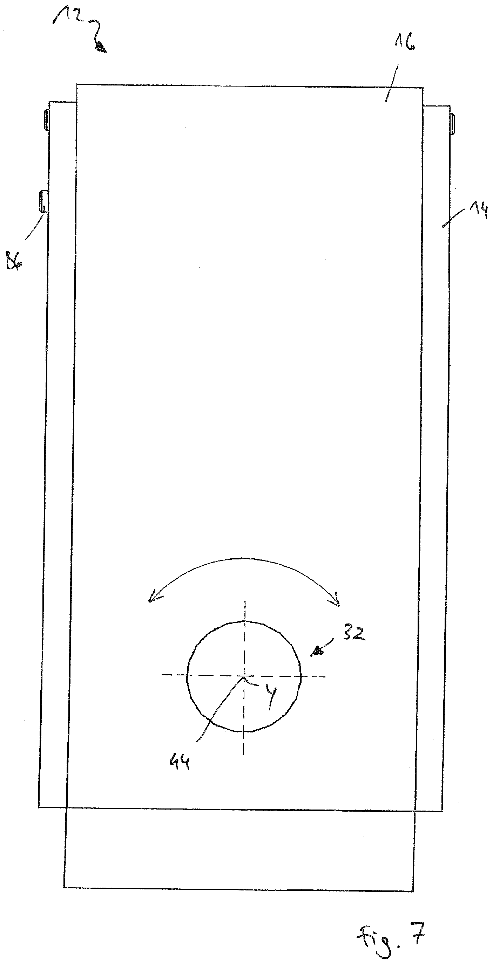

Die Basis 14 und der Träger 16 sind jeweils im Wesentlichen flächige Elemente, welche sich innerhalb zueinander im Wesentlichen paralleler Erstreckungsebenen erstrecken (hier: in der x-, z-Ebene). Zur Lagerung des Trägers 16 an der Basis 14 ist eine Lagereinheit 32 vorgesehen. Diese ist in Figur 3 perspektivisch und in den Figuren 4 bis 6 in einem Schnitt dargestellt. Beim dargestellten Ausführungsbeispiel ist die Lagereinheit 32 in Form eines Pendel- oder Gelenklagers ausgebildet. Dieses umfasst ein mit der Basis 16 verbundenes Lagerteil 34 mit einem Außenring 36 zur Lagerung eines Innenrings 38, der drehfest mit einem mit dem Träger 14 verbundenen Lagerteil 40 verbunden ist. Der Außenring 36 und der Innenring 38 bilden gemeinsam ein sphärisches Lager, welches ermöglicht, den trägerfesten Lagerteil 40 und somit den Träger 14 um mehrere Rotationsachsen bewegen zu können. Insbesondere kann der Träger um eine Neigungsachse 42, welche der x-Achse entspricht, bewegt werden (vergleiche Figuren 4 bis 6). Ferner kann das Lagerteil 40 und somit der Träger 14 um eine Schwenkachse 44, welche der y-Achse entspricht, verschwenkt werden (vergleiche Figuren 7 bis 9).

Zur Festlegung des Trägers 16 an der Basis 14 und Fixierung in einer bestimmten Neigungs- und Schwenklage umfasst die Werkzeugmaschineneinheit 12 vorzugsweise jeweils mehrere Druckeinrichtungen 46 und Zugeinrichtungen 48.

Die Einrichtungen 46 und 48 erstrecken sich vorzugsweise jeweils senkrecht zu den Erstreckungsebenen der Basis 14 und des Trägers 16. Die Druckeinrichtungen 46 sind beispielsweise in Form von Druckfedern ausgebildet und beispielsweise an der Basis 14 fixiert, vorzugsweise mittels einer Schraube 50. Das freie Ende der Druckfeder übt mit einer Stirnfläche 52 eine Druckkraft auf eine Unterseite 54 des Trägers 16 aus. Die Unterseite 54 des Trägers 16 ist einer Oberseite 56 der Basis 14 zugewandt.

Vorzugsweise sind mehrere Druckeinrichtungen 52 entlang eines Umfangs um die Lagereinheit 32 verteilt angeordnet. Räumlich versetzt zu den Druckeinrichtungen 46 und räumlich versetzt zu der Lagereinheit 32 sind vorzugsweise mehrere Zugeinrichtungen 48 angeordnet. Entlang einer der Achsen, beispielsweise entlang der z-Achse, sind die Druckeinrichtungen 46 und die Zugeinrichtungen 48 bezogen auf einen Mittelpunkt der Lagereinheit 32 auf einander gegenüberliegenden Seiten angeordnet.

Die Zugeinrichtungen 48 umfassen beispielsweise eine Zugstange 58, welche mit dem Träger 16 verbunden ist und mittels einer Druckfeder 60 auf Zug beansprucht ist.

Die Druckeinrichtungen 46 und die Zugeinrichtungen 48 erzeugen ein um die Lagereinheit 32 wirksames Drehmoment, welches den Träger 16 in Drehrichtung um die x-Achse vorspannt. Dieser Vorspannung wirkt eine nachfolgend beschriebene Neigungseinstelleinrichtung 60 entgegen. Diese umfasst einen zylindrischen Andrückkörper 62, welcher sich vorzugsweise parallel zu der x-Achse erstreckt und mit einer linienförmige Kontaktfläche 64 mit der Unterseite 54 des Trägers 16 zusammenwirkt (vergleiche Figur 4).

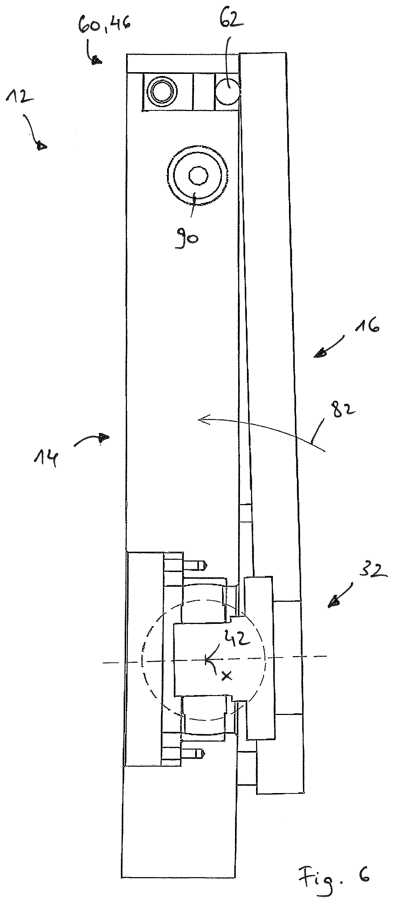

Die Neigungseinstelleinrichtung 60 ist an der Basis 14 angeordnet und umfasst eine Spindel 66, welche von Hand oder motorisch betätigbar ist und zwei Spindelblöcke 68 und 70 gegenläufig antreibt. Hierfür weist die Spindel 66 ein mit dem Spindelblock 68 zusammenwirkendes Linksgewinde und ein mit dem Spindelblock 70 zusammenwirkendes Rechtsgewinde auf. Die Spindelblöcke 68 und 70 wirken über Schrägflächen 72 beziehungsweise 74 mit jeweiligen Gegenflächen 76 und 78 zusammen, welche fest mit dem Andrückkörper 62 verbunden sind. Ausgehend aus einer in den Figuren 2 und 4 dargestellten Neigungsgrundstellung kann die Spindel 66 so angetrieben werden, dass sich der Abstand zwischen den Spindelblöcken 68 und 70 vergrößert. Dies bewirkt eine Aushubbewegung des Andrücckörpers 62 aus der Basis 14 heraus, sodass der Träger 16 in einer ersten Richtung 80 um die Neigungsachse 42 verschwenkt wird. In entsprechender Weise kann der Träger 16 durch Verringerung der Distanz der Spindelblöcke 68 und 70 in einer zu der ersten Richtung 80 entgegengesetzten zweiten Richtung 82 um die Neigungsachse 42 bewegt werden (vergleiche Figur 6).

Unabhängig von der Neigungslage des Trägers 16 um die Neigungsachse 42 übt der Andrückkörper 62 immer eine Druckkraft auf den Träger 16 aus, sodass die Neigungseinstelleinrichtung 60 auch als Druckeinrichtung 46 wirksam ist.

Da sich die Kontaktfläche 64 des Andrückkörpers 62 parallel zu der x-Achse erstreckt, wird eine Bewegung des Trägers 16 um die z-Achse verhindert. Dieser dritte Rotationsfreiheitsgrad wird also prinzipiell durch die Lagereinheit 32 vorgehalten, jedoch nicht genutzt.

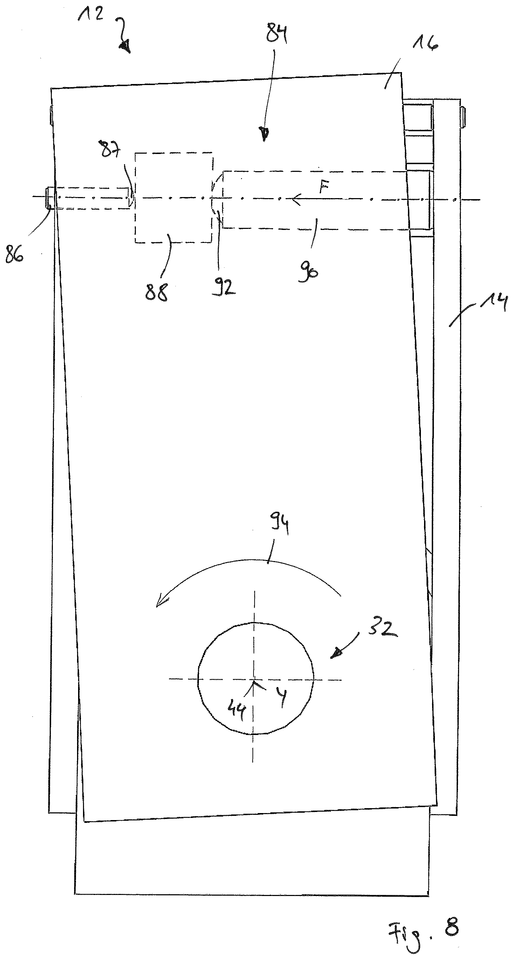

Zur Einstellung einer Schwenklage des Trägers 16 um eine Schwenkachse 44, welche der y-Achse entspricht, umfasst die Werkzeugmaschineneinheit 12 eine Schwenklageneinstelleinrichtung 84 (vergleiche Figur 8). Diese umfasst ein Antriebsteil 86, beispielsweise in Form eines manuell oder motorisch betätigbaren Stifts 86, welcher mit der Basis 14 verbunden ist und mit einer vorzugsweise gehärteten und abgerundeten Andrückfläche 87 auf ein Abtriebsteil 88 wirkt, welches fest mit dem Träger 16 verbunden ist. Das Abtriebsteil 88 ist zwischen dem Antriebsteil 86 und einem mit der Basis 14 verbundenen Gegenhalter 90 eingespannt. Der Gegenhalter 90 umfasst ebenfalls eine vorzugsweise gehärtete und gerundete Andrückfläche 92. Der Gegenhalter 90 ist beispielsweise in Form einer Zylinder-/Kolbeneinheit ausgebildet und/oder in Form einer Druckfeder, insbesondere mit quadratischem Querschnitt. Der Gegenhalter 90 bewirkt, dass unabhängig von der Einstellung des Antriebsteils 86 und der Lage des Abtriebsteils 88 dieses in allen Schwenklagen des Trägers 16 fest zwischen der Andrückfläche 87 und der Andrückfläche 92 eingespannt ist.

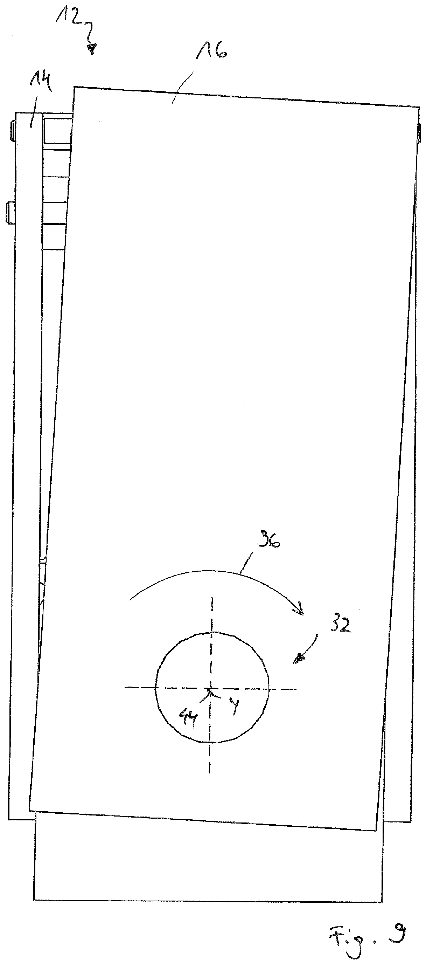

Die Schwenklageneinstelleinrichtung 84 ermöglicht es, den Träger 16 aus einer in Figur 7 dargestellten Grundstellung in einer ersten Schwenkrichtung 94 zu verschwenken (vergleiche Figur 8) und in einer hierzu entgegengesetzten zweiten Schwenkrichtung 96 (vergleiche Figur 9).

Die Neigungseinstelleinrichtung 60 und die Schwenklageneinstelleinrichtung 84 sind in räumlicher Nähe zueinander im Bereich eines von der Lagereinheit 32 entfernten Endes der Basis 14 angeordnet. Dies ermöglicht eine besonders präzise Einstellung der Neigung und Schwenklage des Trägers 16.

## Patentansprüche

1. Werkzeugmaschineneinheit (12) zur Ausrichtung eines Werkzeugs (24) oder eines Werkstücks, mit einer Basis (14) zur Verbindung mit einem Maschinengestell und mit einem relativ zu der Basis (14) bewegbaren Träger (16) zur Anordnung des Werkzeugs oder des Werkstücks (24), wobei zur Lagerung des Trägers (16) an der Basis (14) eine Lagereinheit (32) mit mindestens zwei Rotationsfreiheitsgraden vorgesehen ist, wobei eine Schwenklageneinstelleinrichtung (84) zur Einstellung einer Schwenklage des Trägers (16) um eine Schwenkachse (44) vorgesehen ist und der Träger (16) um eine Neigungsachse (42) neigungseinstellbar ist, wobei die Schwenkachse (44) und die Neigungsachse (42) zueinander senkrecht verlaufen, und wobei der Träger (16) um eine sowohl zu der Schwenkachse (44) als auch zu der Neigungsachse (42) senkrechte dritte Achse herum unbewegbar ist, **dadurch gekennzeichnet, dass** sich die Schwenkachse (44) senkrecht zu einer Erstreckungsebene des Trägers (16) erstreckt und dass die Lagereinheit (32) in Form eines Pendel- oder Gelenklagers ausgebildet ist, das drei Rotationsfreiheitsgrade aufweist, die durch sphärische Gleitflächen realisiert sind.

2. Werkzeugmaschineneinheit (12) nach Anspruch 1, **dadurch gekennzeichnet, dass** zur Festlegung des Trägers (16) an der Basis (14) mindestens eine Druckeinrichtung (46) vorgesehen ist, welche den Träger (16) von der Basis (14) wegdrückt, und/oder mindestens eine Zugeinrichtung (48), welche den Träger (16) in Richtung auf die Basis (14) zieht.

3. Werkzeugmaschineneinheit (12) nach Anspruch 2, **dadurch gekennzeichnet, dass** die Druckeinrichtung (46) und die Zugeinrichtung (48) räumlich voneinander versetzt angeordnet sind.

4. Werkzeugmaschineneinheit (12) nach einem der voranstehenden Ansprüche, **dadurch gekennzeichnet, dass** eine Neigungseinstelleinrichtung (60) zur Einstellung einer Neigung des Trägers (16) um eine Neigungsachse (42) vorgesehen ist.

5. Werkzeugmaschineneinheit nach Anspruch 4, **dadurch gekennzeichnet, dass** sich die Neigungsachse (42) parallel zu einer Erstreckungsebene des Trägers (16) erstreckt.

6. Werkzeugmaschineneinheit (12) nach Anspruch 4 oder 5, **dadurch gekennzeichnet, dass** die Neigungseinstelleinrichtung (60) als Druckeinrichtung (46) wirksam ist, welche den Träger (16) von der Basis (14) wegdrückt.

7. Werkzeugmaschineneinheit (12) nach einem der Ansprüche 4 bis 6, **dadurch gekennzeichnet, dass** die Neigungseinstelleinrichtung (60) einen prismenförmigen Andrückkörper (62) umfasst, welcher mit einem Teilumfang seiner Mantelfläche an einer Kontaktfläche (54) des Trägers (16) oder der Basis (14) anliegt.

## Claims

1. Machine-tool unit (12) for aligning a tool (24) or workpiece with a base (14) for connecting to a machine frame and with a mobile support (16) relative to the base (14) for aligning the tool or workpiece (24), comprising a bearing unit (32) with at least two degrees of rotational motion for storing the support (16) at the base (14), likewise comprising a swivel bearing setting fixture (84) for setting a swivel bearing of the support (16) around a swivel axis (44) and whereby the support (16) can be tilted on an axis of inclination (42), whereby the swivel axis (44) and the axis of inclination (42) are perpendicular to one another, and whereby the support (16) is immobile around a third axis perpendicular to both the swivel axis (44) as well as the axis of inclination (42), **characterized in that** the swivel axis (44) is perpendicular to an extending level of the support (16) and **in that** the bearing unit (32) is a self-aligning or joint bearing having three degrees of rotational motion being realized by spherical sliding surfaces.

2. Machine-tool unit (12) as per claim 1, **characterized in that** at least one pressure fixture (46) is provided to fasten the support (16) to the base (14) and which pushes the support (16) away from the base (14), and/or at least one drawgear (48) that pulls the support (16) onto the base (14).

3. Machine-tool unit (12) as per claim 2, **characterized in that** the pressure fixture (46) and the drawgear (48) are physically separated from each other.

4. Machine-tool unit (12) as per one of the preceding claims, **characterized in that** an inclination setting unit (60) for setting the inclination of the support (16) is located around an axis of inclination (42).

5. Machine-tool unit (12) as per claim 4, **characterized in that** the axis of inclination (42) extends parallel to an extending level of the support (16).

6. Machine-tool unit (12) as per claim 4 or 5, **characterized in that** the inclination setting unit (60) functions as a pressure fixture (46) that pushes the support (16) away from the base (14).

7. Machine-tool unit (12) as per one of the claims 4 to 6, **characterized in that** the inclination setting unit (60) comprises a prism-shaped pressure body (62), part of the lateral surface of which rests on a contact surface (54) of the support (16) or the base (14).

## Revendications

1. Unité de machine-outil (12) pour aligner un outil (24) ou une pièce à usiner, comprenant une base (14) destinée à être reliée à un bâti de machine et un support (16) déplaçable par rapport à la base (14) et destiné à disposer l'outil ou la pièce à usiner (24), dans laquelle une unité formant palier (32) ayant au moins deux degrés de liberté de rotation est prévue pour supporter le support (16) sur la base (14), dans laquelle un dispositif de réglage de position de pivotement (84) est prévu pour régler une position de pivotement du support (16) autour d'un axe de pivotement (44) et ledit support (16) est réglable en inclinaison sur un axe d'inclinaison (42), dans laquelle ledit axe de pivotement (44) et ledit axe d'inclinaison (42) s'étendent perpendiculairement l'un à l'autre, et dans laquelle le support (16) est immobile autour d'un troisième axe perpendiculaire aussi bien à l'axe de pivotement (44) qu'à l'axe d'inclinaison (42), **caractérisée par le fait que** l'axe de pivotement (44) s'étend perpendiculairement à un plan d'extension du support (16) et **par le fait que** l'unité formant pallier (32) est un roulement auto-aligneur ou joint avec trois degrés de liberté de rotation qui sont réalisés par des surfaces de glissement sphériques.

2. Unité de machine-outil (12) selon la revendication 1, **caractérisée par le fait que**, pour fixer le support (16) sur la base (14), on prévoit au moins un dispositif de pression (46) qui éloigne le support (16) de la base (14) en poussant, et/ou au moins un dispositif de traction (48) qui tire le support (16) vers la base (14).

3. Unité de machine-outil (12) selon la revendication 2, **caractérisée par le fait que** ledit dispositif de pression (46) et ledit dispositif de traction (48) sont disposés de manière à être décalés l'un de l'autre dans l'espace.

4. Unité de machine-outil (12) selon l'une quelconque des revendications précédentes, **caractérisée par le fait qu'**un dispositif de réglage d'inclinaison (60) est prévu pour régler une inclinaison du support (16) autour d'un axe d'inclinaison (42).

5. Unité de machine-outil selon la revendication 4, **caractérisée par le fait que** l'axe d'inclinaison (42) s'étend parallèlement à un plan d'extension du support (16) .

6. Unité de machine-outil (12) selon la revendication 4 ou 5, **caractérisée par le fait que** ledit dispositif de réglage d'inclinaison (60) agit en tant que dispositif de pression (46) qui éloigne le support (16) de la base (14) en poussant .

7. Unité de machine-outil (12) selon l'une quelconque des revendications 4 à 6, **caractérisée par le fait que** ledit dispositif de réglage d'inclinaison (60) comprend un corps de pression (62) en forme de prisme qui est en appui par une circonférence partielle de sa surface latérale sur une surface de contact (54) du support (16) ou de la base (14) .
